# EUROPÄISCHE PATENTANMELDUNG

(11) **EP 1 801 317 A2**
(43) Veröffentlichungstag der Anmeldung: **27.06.2007**
(21) Anmeldenummer: 06126034.5
(22) Anmeldetag: 13.12.2006
(51) Int. Cl.: E04G 15/06

(54) **Flachmaterial für Leitungsdurchführungen**

(30) Priorität: 23.12.2005 DE 102005000208
(71) Anmelder: HILTI Aktiengesellschaft, 9494 Schaan (LI)
(72) Erfinder: Förg, Christian, 86862, Dillishausen (DE); Münzenberger, Herbert, 65191, Wiesbaden (DE); Nuesch, Heiri, 9475, Sevelen (CH)
(74) Vertreter: Wildi, Roland

(57) **Zusammenfassung**

Die Erfindung betrifft ein Flachmaterial (10) für Leitungsdurchführungen (40) mit einer ersten Schicht (11) aus leistenförmigen Platten (14) die an langen Schmalseiten jeweils unter Einschluss eines Spalts (15) aneinander liegen, mit einer zweiten Schicht (13) aus einem elastischen Material und mit einer zwischen der ersten Schicht (11) und der zweiten Schicht (13) liegenden Zwischenschicht (12).

## Beschreibung

Die Erfindung betrifft ein Flachmaterial für Leitungsdurchführungen, der im Patentanspruch 1 genannten Art. Ein derartiges Flachmaterial für Leitungsdurchführungen dient der Innenverschalung der die Leitungen, wie z. B. Rohren, Kabeln oder Kabelkanälen, aufnehmenden Durchbrüche durch Bauteile, wie z. B. Decken oder Wände.

Bei derartigen Leitungsdurchführungen wird in einen in einem Bauteil vorhandenen Durchbruch ein Hüll- oder Futterrohr eingebracht, welches den Durchbruch verschalt. Durch dieses Hüllrohr kann dann die Leitung hindurchgeführt und gegenüber dem Hüllrohr abgedichtet werden.

Aus der DE 103 13 305 A1 ist ein derartiges Futterrohr für Leitungsdurchführungen bekannt, das ein im Wesentlichen zylindrisches Basisrohr, welches mit mehreren umlaufenden Lamellen versehen ist, und an beiden Endbereichen jeweils Rohrabschnitte grösseren Durchmessers aufweist.

Von Nachteil bei derartigen Hüll- bzw. Futterrohren ist, dass diese jeweils nur für Leitungsdurchführungen mit einem bestimmten Durchmesser verwendbar sind. Je nach Öffnungsgrösse der Leitungsdurchführung muss also ein entsprechend dimensioniertes Hüllrohr eingesetzt werden.

Der vorliegenden Erfindung liegt die Aufgabe zugrunde, ein Material für Leitungsdurchführungen bereitzustellen, das die genannten Nachteile vermeidet und flexibel einsetzbar ist.

Erfindungsgemäss wird die Aufgabe dadurch gelöst, dass ein Flachmaterial für Leitungsdurchführungen bereitgestellt wird, welches eine erste Schicht aus leistenförmigen Platten, die an langen Schmalseiten jeweils unter Einschluss eines Spalts aneinander liegen, eine zweite Schicht aus einem elastischen Material und eine zwischen der ersten Schicht und der zweiten Schicht liegende Zwischenschicht aufweist. Aus diesem an den Spalten zwischen den starren leistenförmigen Platten leicht knick- bzw. biegbarem Flachmaterial können in einfacher Weise Hüllrohre für Leitungsdurchführungen verschiedener Grösse erstellt werden. Beim Biegen des Flachmaterials zum Rohr ist der Spalt zwischen den leistenförmigen Platten verschliessbar. Das Flachmaterial ist ferner an den Spalten bzw. Zwischenräumen zwischen den leistenförmigen Platten leicht durchtrennbar, so dass Stücke unterschiedlicher Länge erzeugt werden können. Aus dem Flachmaterial lassen sich ferner Hüllrohre für Leitungsdurchführungen erstellen, die in mehrere Durchführungsabschnitte unterteilt sind, da das erfindungsgemässe Flachmaterial entlang der Spalte auch gut faltbar ist. Eine Separation von Leitungsbündeln in der Leitungsdurchführung ist somit möglich.

Die leistenförmigen Platten weisen vorteilhaft eine Breite von 10 bis 50 mm, besonders vorteilhaft eine Breite von 15 bis 25 mm auf.

Vorteilhaft besteht die Zwischenschicht aus einem wenig streckbaren Material, dessen maximale Streckgrenze bei ca. 10% liegt. Die Zwischenschicht verhindert dabei, dass insbesondere die zweite Schicht mit dem elastischen Material bei der Montage überdehnt wird und ggf. reisst. Das wenig streckbare Material sollte dabei biegsam sein, um eine gute Aufrollbarkeit zu gewährleisten.

Das wenig streckbare Material ist dabei vorteilhaft als Gewebematerial ausgebildet. Günstig ist es z. B. wenn das das wenig streckbare Material ein Glasfasergewebe ist, welches eine hohe Zugfestigkeit und gleichzeitig ausreichende Biegeeigenschaften aufweist. Alternativ ist das wenig streckbare Material ein Metallgewebe.

Vorteilhaft ist das elastische Material der zweiten Schicht als elastische Beschichtung ausgebildet, die bei der Herstellung des Flachmaterials direkt auf die erste Schicht mit der darauf liegenden Zwischenschicht aufgebracht wird. Alternativ könnte das elastische Material aber auch z. B. als Bahn vorgefertigt sein und z. B. klebetechnisch auf die erste Schicht mit der Zwischenschicht aufgebracht werden.

Weiterhin von Vorteil ist es, wenn das elastische Material der zweiten Schicht ein intumeszierendes Beschichtungsmaterial ist. Hierdurch kann eine Leitung, die durch ein aus dem erfindungsgemässen Flachmaterial geformtes Hüllrohr hindurch geführt ist, im Brandfall direkt durch das Hüllrohr abgedichtet werden.

Eine hohe thermische und mechanische Belastbarkeit des Flachmaterials wird erzielt, wenn die leistenförmigen Platten aus Stahlblech bestehen.

Günstigerweise ist das Flachmaterial als ablängbares Endlosmaterial ausgebildet, was eine kostengünstige Herstellung und einen flexiblen Einsatz des Flachmaterials ermöglicht. Das Flachmaterial kann z. B. auf Rollen aufgewickelt konfektioniert werden.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
- Fig. 1: ein Flachmaterial für Leitungsdurchführungen,
- Fig. 2: eine Leitungsdurchführung in einem Bauteil mit einem in der Leitungsdurchführung angeordneten Rohr.

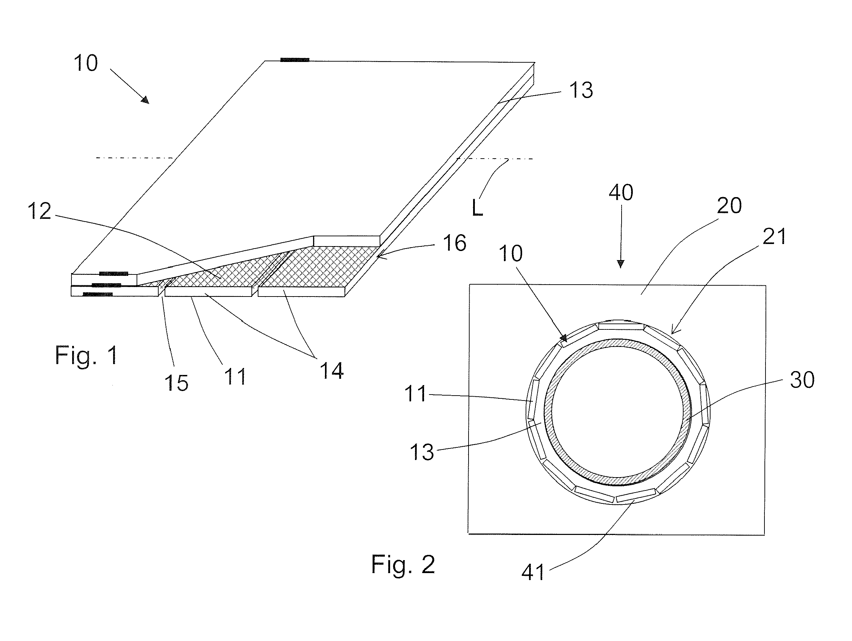

In Fig. 1 ist ein erfindungsgemässes Flachmaterial 10 für Leitungsdurchführungen dargestellt, welches als aufrollbares Endlosmaterial ausgebildet ist. Das Flachmaterial 10 ist aus drei Schichten aufgebaut. Eine erste Schicht 11 ist aus leistenförmigen Platten 14 aus Metall, wie z. B. Stahlblechplatten oder Aluminiumblechplatten, gebildet, die parallel zueinander verlaufend und senkrecht zu einer Längsrichtung L des Flachmaterials 10 an diesem angeordnet sind. Die leistenförmigen Platten 14 weisen eine Breite von 25 mm auf. Eine zweite Schicht 13 besteht aus einem elastischen, intumeszierenden Material das als Beschichtung auf die erste Schicht 11 aufgebracht ist. Das elastische intumeszierende Material besteht dabei z. B. aus einer Matrix aus Latex, Acrylat, Polyurethan oder einem anderen elastischen Kunststoff in die eine intumeszierende Komponente wie z. B. Blähgraphit eingebracht ist.

Zwischen der ersten Schicht 11 und der zweiten Schicht 13 ist ferner noch eine Zwischenschicht 12 angeordnet die aus einem wenig streckbaren Material mit einer Streckgrenze von ca. 5%, wie z. B. einem grobmaschigen Glasfasergewebe, besteht. Anstelle eines Glasfasergewebes kann z. B. auch ein Kunststoff- oder Naturfasergewebe, eine Kunststofffolie oder eine Mehrzahl parallel in Längsrichtung L des Flachmaterials zueinander verlaufender Fäden, Stränge oder Bänder aus Kunststoff, Glas- oder Naturfaser verwendet werden. Ebenso kann das wenig streckbare Material auch aus einem gewirkten Kunststoff-, Natur- oder Glasfasermaterial bestehen. Unter Naturfasern werden dabei z. B. Fasern oder Garne aus Baumwolle, Wolle, Leinen oder Pflanzenfasern, wie z. B. Jute oder Sisal verstanden.

Aufgrund der zwischen den leistenförmigen Platten 14 der ersten Schicht 11 vorgesehenen Spalte 15 ist das Flachmaterial 10 in Richtung seiner Längsrichtung L gut aufrollbar und kann in Rollenform konfektioniert werden (in den Figuren nicht dargestellt). Ferner lässt sich das Flachmaterial 10 an diesen Spalten 15 gut biegen bzw. falten und durchtrennen.

In Fig. 2 ist eine Leitungsdurchführung 40 dargestellt, bei der das erfindungsgemässe Flachmaterial 10 entsprechend dem Innenumfang eines Durchbruches 21 abgelängt und zu einem Hüllrohr geformt wurde. Das Flachmaterial 10 kleidet dabei den Durchbruch 21 in einem Bauteil 20, wie z. B. einer Wand, aus. Zwischen der Innenwand des Durchbruchs 21 und der ersten Schicht 11 des Flachmaterials 10 ist eine Dichtmasse 41 eingebracht worden um verbleibende Zwischenräume und Spalten zu füllen. Die Dichtmasse 41 kann dabei z. B. auch als intumeszierende Dichtmasse ausgebildet sein. Innen in der Leitungsdurchführung 40 ist eine als Rohrleitung ausgebildete Leitung 30 durchgeführt, an der die zweite Schicht 13 aus dem elastischen Material dichtend anliegt.

Liegt infolge der Geometrie der Rohrleitung 30 die zweite Schicht 13 nicht an der Rohrleitung 30 an, so wird vorteilhaft eine Dichtmasse 41 zur Abdichtung verwendet. Neben einer intumeszierende Dichtmasse ist auch eine Verwendung von Gips oder Mörtel denkbar.

## Patentansprüche

1. Flachmaterial (10) für Leitungsdurchführungen (40)
mit einer ersten Schicht (11) aus leistenförmigen Platten (14) die an langen Schmalseiten jeweils unter Einschluss eines Spalts (15) aneinander liegen,
mit einer zweiten Schicht (13) aus einem elastischen Material
und mit einer zwischen der ersten Schicht (11) und der zweiten Schicht (13) liegenden Zwischenschicht (12).

2. Flachmaterial nach Anspruch 1, **dadurch gekennzeichnet, dass** die Zwischenschicht (12) aus einem wenig streckbaren Material besteht.

3. Flachmaterial nach Anspruch 1 oder 2, **dadurch gekennzeichnet, dass** das wenig streckbare Material ein Gewebematerial ist.

4. Flachmaterial nach einem der Ansprüche 1 bis 3, **dadurch gekennzeichnet, dass** das wenig streckbare Material ein Glasfasergewebe ist.

5. Flachmaterial nach einem der Ansprüche 1 bis 4, **dadurch gekennzeichnet, dass** das elastische Material der zweiten Schicht (13) eine elastische Beschichtung ist.

6. Flachmaterial nach einem der Ansprüche 1 bis 5, **dadurch gekennzeichnet, dass** das elastische Material der zweiten Schicht (13) ein intumeszierendes Beschichtungsmaterial ist.

7. Flachmaterial nach einem der Ansprüche 1 bis 6, **dadurch gekennzeichnet, dass** die leistenförmigen Platten (14) aus Metall bestehen.

8. Flachmaterial nach einem der Ansprüche 1 bis 7, **dadurch gekennzeichnet, dass** die leistenförmigen Platten (14) aus Stahlblech bestehen.

9. Flachmaterial nach einem der Ansprüche 1 bis 8, **gekennzeichnet durch** eine Ausbildung als ablängbares Endlosmaterial.
